# DEMANDE DE BREVET EUROPEEN

(11) **EP 0 657 322 A1**
(43) Date de publication de la demande: **14.06.1995**
(21) Numéro de dépôt: 94402837.2
(22) Date de dépôt: 09.12.1994
(51) Int. Cl.: B60L 15/20, B60L 3/00

(54) **Procédé de commande pour véhicule automobile à propulsion électrique et dispositif pour sa mise en oeuvre**

(30) Priorité: 10.12.1993 FR 9314847
(71) Demandeur: Société Anonyme dite: REGIE NATIONALE DES USINES RENAULT, F-92109 Boulogne Billancourt (FR)
(72) Inventeur: Berrie, Yves, F-78120 Viroflay (FR); Lezy, Patrick, F-92360 Meudon La Foret (FR)

(57) **Abrégé**

Procédé de commande pour véhicule à propulsion électrique et à mécanisme de transmission (9) sans embrayage du type comportant un moteur électrique (2) actionné par une centrale de pilotage (3) en fonction des ordres donnés par le conducteur, caractérisé en ce qu'il consiste à reconnaître l'entrée en phase d'arrêt du véhicule et sitôt cette reconnaissance opérée à commander automatiquement l'entraînement du moteur (2) de façon à assurer le déplacement du véhicule selon une vitesse sensiblement constante et ce, aussi longtemps que le contact assurant la mise sous tension du véhicule n'est pas coupé ou que le sélecteur du sens de marche du véhicule n'est pas enclenché en position neutre ou encore que le frein à main n'a pas été actionné.

## Description

La présente invention a trait à un procédé et à un dispositif de commande pour véhicule automobile à propulsion électrique. Elle concerne plus particulièrement un procédé et un dispositif de commande des moteurs de traction des véhicules propulsés électriquement et dépourvus de mécanisme d'embrayage.

Avec les véhicules propulsés électriquement connus, rien ne permet de distinguer à l'arrêt, les véhicules dont les moteurs sont sous tension et qui sont prêts à démarrer, des véhicules définitivement immobilisés par suite de la déconnexion de leurs moteurs après coupure du contact ou par suite de l'enclenchement en position neutre du sélecteur du sens de marche du véhicule.

En effet, il n'existe pas de phase de fonctionnement ralenti sur les moteurs électriques de traction destinés à équiper les véhicules automobiles, aussi lorsqu'un véhicule électrique s'immobilise, son moteur s'arrête de tourner et demeure alors parfaitement silencieux, sans que rien ne trahisse sa mise sous tension.

Malgré l'existence sur certains modèles d'un voyant disposé sur le tableau de bord et avertissant le conducteur de la mise sous tension du moteur, il existe donc un risque potentiel que le conducteur quitte son véhicule en oubliant de couper le contact, laissant à des tiers, enfants, etc., la possibilité d'utiliser le véhicule.

La présente invention se propose donc de remédier à cet inconvénient en proposant un procédé de commande pour véhicule automobile à propulsion électrique, qui assure une utilisation plus sûre des véhicules électriques, le dispositif de mise en oeuvre de ce procédé ayant l'avantage d'être particulièrement simple à mettre en oeuvre et d'un surcoût quasiment nul.

Le procédé de commande selon l'invention concerne donc les véhicules à propulsion électrique sans embrayage.

Selon l'invention, le procédé de commande est caractérisé en ce qu'il consiste à reconnaître l'entrée en phase d'arrêt du véhicule et sitôt cette reconnaissance opérée à commander automatiquement l'entraînement du moteur (2) de façon à assurer le déplacement du véhicule selon une vitesse sensiblement constante et ce, aussi longtemps que le contact assurant la mise sous tension du véhicule n'est pas coupé ou que le sélecteur du sens de marche du véhicule n'est pas enclenché en position neutre ou encore que le frein à main n'a pas été actionné. Ainsi, le conducteur est obligé de couper le contact ou bien d'enclencher la position neutre du sélecteur du sens de marche du véhicule, lorsqu'il veut quitter son véhicule.

Par la publication EP 585.122, il est connu de maintenir l'entraînement d'un véhicule à propulsion électrique à faible vitesse en l'absence d'action sur l'accélérateur, de façon analogue à un véhicule à transmission automatique équipé d'un moteur à combustion interne.

Cependant, cette disposition vise à faciliter les manoeuvres et notamment les manoeuvres de parking et ne s'applique qu'à un véhicule à propulsion électrique équipé d'une transmission automatique.

De plus, cette disposition ne prévoit pas de maintenir la vitesse du véhicule constante, quelles que soient les conditions extérieures. L'inconvénient présenté par un tel système est que le véhicule peut sortir du mode d'avancement à vitesse faible lorsque, par exemple, il dévale une forte pente.

Par la publication WO 93/04888, il est également connu de maintenir l'entraînement d'un véhicule à propulsion électrique en l'absence d'action sur l'accélérateur. Cette action a toutefois pour seul but d'éviter le recul du véhicule dans une côte et est donc couplé à la détection de l'éventuel recul du véhicule.

Selon l'invention, le procédé comprend donc essentiellement deux étapes, la première consistant à identifier la phase d'arrêt du véhicule, et la seconde à commander, une fois cet arrêt reconnu, l'entraînement du moteur pour assurer l'avancement du véhicule à vitesse sensiblement constante tant que le contact n'est pas coupé, ou que le sélecteur du sens de marche du véhicule n'est pas enclenché en position neutre, ou que la pédale de frein n'est pas actionnée.

Selon une caractéristique du procédé de commande objet de l'invention, une phase d'arrêt du véhicule est déterminée par une vitesse d'avancement du véhicule qui devient inférieure à une valeur de seuil prédéterminée et par l'absence d'ordre émanant du conducteur (pédales d'accélération et de frein au repos).

Le dispositif pour la mise en oeuvre du procédé de commande selon l'invention est plus particulièrement destiné à équiper un véhicule à propulsion électrique du type à mécanisme de transmission sans embrayage, comportant un moteur électrique actionné par une centrale de pilotage en fonction des ordres donnés par le conducteur.

Selon l'invention le dispositif de commande est caractérisé en ce qu'il comporte des moyens de contrôle coopérant avec la centrale de pilotage, pour provoquer en phase d'arrêt du véhicule, l'actionnement du moteur de façon à faire avancer le véhicule à vitesse constante.

Selon une autre caractéristique du dispositif de commande pour véhicule à propulsion électrique selon l'invention, les moyens de contrôle coopèrent avec des moyens de détection de l'entrée en phase d'arrêt du véhicule.

Selon une autre caractéristique du dispositif de commande pour véhicule à propulsion électrique selon l'invention, les moyens de détection comprennent un capteur de position coopérant avec la pédale de frein et un capteur de vitesse du véhicule.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :

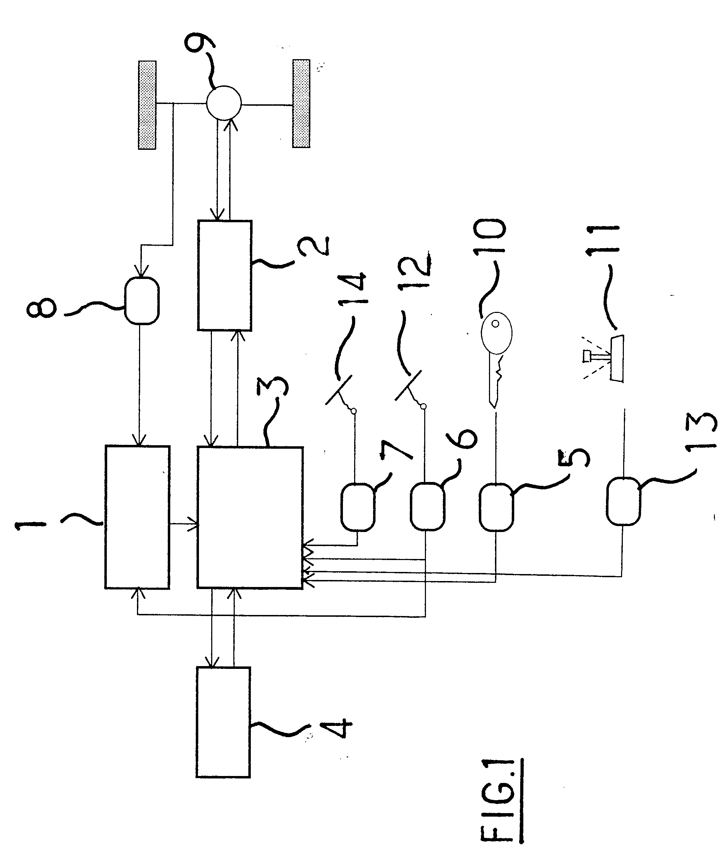

- la figure 1 est une vue schématique d'un système de traction électrique pour véhicule automobile équipé d'un dispositif de commande selon l'invention.

Conformément à la figure 1, seuls les éléments nécessaires à la compréhension de l'invention ont été représentés.

Le système de traction électrique du véhicule automobile représenté comprend classiquement un moteur de traction électrique 2 directement lié en rotation avec le mécanisme de transmission 9 du véhicule comprenant classiquement un réducteur, un différentiel et les arbres des roues motrices.

L'énergie électrique est délivrée au moteur 2 depuis une batterie de puissance 4 par l'intermédiaire d'une centrale de pilotage 3 comprenant des éléments de puissance et un dispositif convertissant en instructions de commandes du moteur 2, les ordres donnés par le conducteur : actionnement de la clef de contact 10, position du sélecteur du sens de marche 11, (marche avant, marche arrière, neutre ....) positions de la pédale d'accélération 14 et de la pédale de frein 12, ces ordres étant préalablement convertis en signaux électriques par des capteurs correspondants respectivement 5, 13, 6 et 7.

Le dispositif de commande du moteur 2 pour la mise en oeuvre du procédé selon l'invention comprend alors des moyens de contrôle 1, tel qu'un microcontrôleur, qui en fonction des informations fournies par un capteur de vitesse véhicule 8 et par le capteur de position 6 solidaire de la pédale de frein 12 déclenche automatiquement l'actionnement du moteur 2 par l'intermédiaire de la centrale de pilotage 3.

Conformément à la description qui précède, le procédé de commande selon l'invention est le suivant, les informations fournies en permanence par le capteur de vitesse 8 et par le capteur de position 6 à chaque utilisation du véhicule, permettent aux moyens de contrôle 1 de suivre la progression du véhicule et de déterminer l'entrée en phase d'arrêt de ce dernier.

Cette phase d'arrêt est déterminée par une vitesse véhicule devenant inférieure à une valeur de seuil donnée. Cette valeur seuil est choisie préférentiellement inférieure à 1 km/heure, par exemple égale à 0,5 km/heure et par l'absence d'ordre donné par le conducteur, se traduisant par la position au repos de la pédale de frein 12 ; la surveillance de la position de la pédale d'accélérateur 14 est alors facultative car si le conducteur exerce une pression sur cette dernière, la vitesse du véhicule est alors supérieure à la vitesse de seuil.

L'entrée en phase d'arrêt du véhicule ayant été reconnue, le procédé consiste alors à commander automatiquement l'entraînement en rotation du moteur 2 et donc l'avancement du véhicule tant qu'on n'a pas observé la coupure du contact ou la mise en position neutre du sélecteur du sens de marche 11 du véhicule. Cette seconde étape du procédé est également interrompue par l'actionnement de la pédale d'accélérateur, l'actionnement de la pédale de frein ne faisant par contre que la suspendre le temps de cet actionnement.

Le déplacement du véhicule qu'impose le procédé de commande selon l'invention, déplacement analogue au rampage d'un véhicule à moteur à combustion interne équipé d'une boîte de vitesses automatique lors d'un fonctionnement au ralenti avec le levier de vitesse en position "D" (drive), oblige impérativement le conducteur à couper le contact pour arrêter définitivement son véhicule ou à enclencher le sélecteur du sens de marche du véhicule en position neutre, ou à actionner la pédale.

L'entraînement du moteur 2 par les moyens de contrôle 1 est de préférence régulée de façon à obtenir une vitesse de progression sensiblement constante du véhicule quelle que soit la nature du terrain. La vitesse retenue est déterminée expérimentalement en fonction de la nature du véhicule.

Dans une variante de réalisation du dispositif de commande selon l'invention, les moyens de contrôle disposent également de l'information serrage du frein à main, de façon à ne pas opérer l'entraînement du moteur lorsque le frein à main a été serré par le conducteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi les moyens de contrôle 1 peuvent être directement intégrés à la centrale de pilotage 3.

## Revendications

**[1]** Procédé de commande pour véhicule à propulsion électrique et à mécanisme de transmission (9) sans embrayage du type comportant un moteur électrique (2) actionné par une centrale de pilotage (3) en fonction des ordres donnés par le conducteur, caractérisé en ce qu'il consiste à reconnaître l'entrée en phase d'arrêt du véhicule et sitôt cette reconnaissance opérée à commander automatiquement l'entraînement du moteur (2) de façon à assurer le déplacement du véhicule selon une vitesse sensiblement constante et ce, aussi longtemps que le contact assurant la mise sous tension du véhicule n'est pas coupé ou que le sélecteur du sens de marche du véhicule n'est pas enclenché en position neutre ou encore que le frein à main n'a pas été actionné.

**[2]** Procédé de commande pour véhicule à propulsion électrique selon la revendication 1, caractérisé en ce que ladite phase d'arrêt est déterminée par la vitesse du véhicule devenant inférieure à une valeur de seuil prédéterminée et par l'absence d'ordre émanant du conducteur.

**[3]** Dispositif de commande pour véhicule à propulsion électrique et à mécanisme de transmission (9) sans embrayage pour la mise en oeuvre du procédé de commande selon l'une quelconque des revendications 1 à 2, le véhicule comportant un moteur électrique (2) actionné par une centrale de pilotage (3) en fonction des ordres donnés par le conducteur, caractérisé en ce qu'il comporte des moyens de contrôle (1) coopérant avec la centrale de pilotage (3) pour provoquer après la reconnaissance de l'entrée en phase d'arrêt du véhicule, l'actionnement du moteur (2) de façon à faire avancer le véhicule à une vitesse sensiblement constante.

**[4]** Dispositif de commande pour véhicule à propulsion électrique selon la revendication 3, caractérisé en ce que les moyens de contrôle (1) coopèrent avec des moyens de détection (6,8) de l'entrée en phase d'arrêt du véhicule.

**[5]** Dispositif de commande pour véhicule à propulsion électrique selon la revendication 4, caractérisé en ce que lesdits moyens de détection comprennent un capteur de position (6) de la pédale de frein et un capteur de vitesse du véhicule (8).
